Europäisches Patentamt

European Patent Office

Office européen des brevets

(19)

(11) Veröffentlichungsnummer: **0 039 796**
**B1**

(12) **EUROPÄISCHE PATENTSCHRIFT**

(45) Veröffentlichungstag der Patentschrift:
31.07.85

(51) Int. Cl.⁴: **G 06 K 15/10, B 41 J 3/20**

(21) Anmeldenummer: **81102884.4**

(22) Anmeldetag: **15.04.81**

(54) Steuerschaltung für einen Metallpapierdrucker-Schreibkopf mit auf einer Schräge angeordneten Elektroden.

(30) Priorität: 14.05.80 DE 3018408

(43) Veröffentlichungstag der Anmeldung.
18.11.81 Patentblatt 81/46

(45) Bekanntmachung des Hinweises auf die Patenterteilung:
31.07.85 Patentblatt 85/31

(84) Benannte Vertragsstaaten:
DE FR GB IT

(56) Entgegenhaltungen:
DE - A - 2 715 889
FR - A - 2 394 402

(73) Patentinhaber: IBM DEUTSCHLAND GMBH,
Pascalstrasse 100, D-7000 Stuttgart 80 (DE)
(84) Benannte Vertragsstaaten: DE

(73) Patentinhaber: International Business Machines
Corporation, Old Orchard Road, Armonk, N.Y. 10504 (US)
(84) Benannte Vertragsstaaten: FR GB IT

(72) Erfinder: Bahr, Dietrich Jürgen, Dr., Rheinstrasse 49,
D-7033 Herrenberg (DE)
Erfinder: Burckardt, Karl Heinz, Fuldastrasse 11,
D-7033 Herrenberg (DE)

(74) Vertreter: Blutke, Klaus, Dipl.-Ing., Schönaicher
Strasse 220, D-7030 Böblingen (DE)

## Beschreibung

Die Erfindung betrifft eine Steuerschaltung zur Aufbereitung von Druckdaten für einen Metallpapierdrucker der im Oberbegriff des Anspruchs 1 gekennzeichneten Art.

Derartige Steuerschaltungen haben den Zweck, gespeicherte Information in einer Weise aufzubereiten, daß sie für den Ausdruck durch einen Schreibkopf mit auf einer Schräge angeordneten Elektroden geeignet ist.

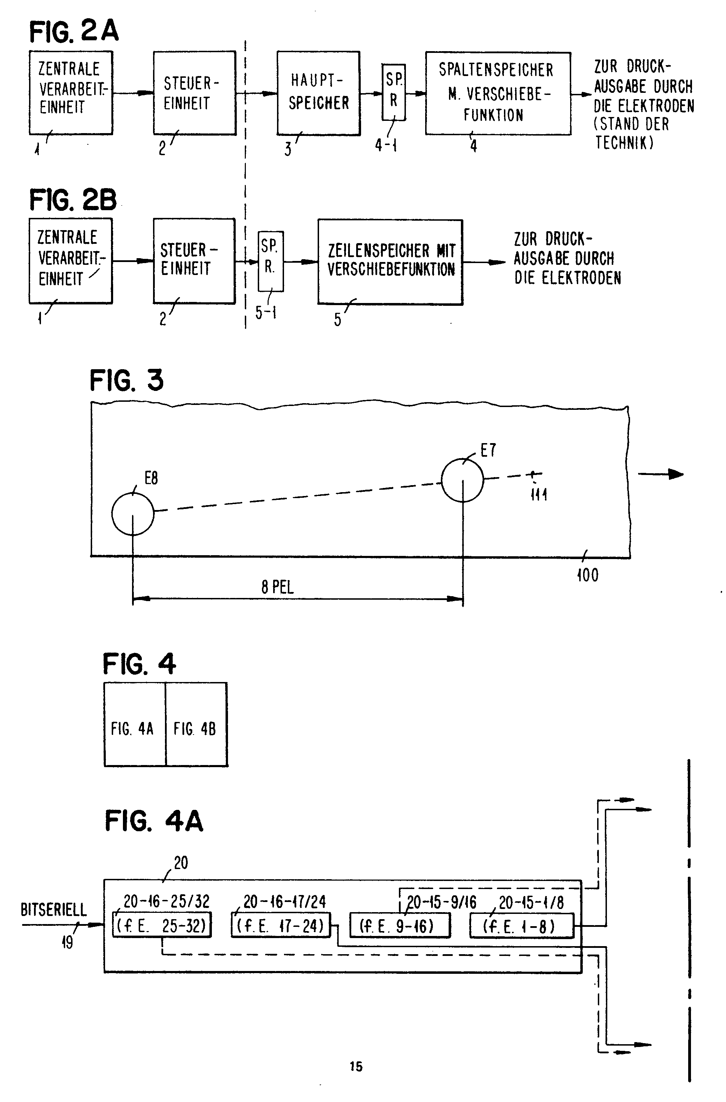

In der DE-A-2 715 889 ist eine solche Steuerschaltung beschrieben. Sie dient der Wiedergabe von aus einzelnen Bildelementen bestehenden matrixartig nach Bildelementenzeilen und Bildelementenspalten strukturierten Zeichen, welche druckbildgetreu in einem Hauptspeicher enthalten sind, wobei jede Elektrode des Schreibkopfes einer Bildelementenzeile zugeordnet ist und wobei die Elektroden in horizontaler Projektion um das D-fache ihrer Elektronenbreite versetzt sind. Sie ist dadurch gekennzeichnet, daß ein nach Zeile und Spalte adressierbarer Zwischenspeicher (in Fig. 2A der vorliegenden Anmeldung mit Spaltenspeicher mit Verschiebefunktion bezeichnet) zur abwechselnden Aufnahme der Information einer Bildelementenspalte in einer Einlesephase und Abgabe von Information in einer Auslesephase zur Ansteuerung der Elektroden vorgesehen ist, daß die Zeilen dieses Zwischenspeichers jeweils einer Bildelementenzeile bzw. einer Schreibelektrode zugeordnet sind, daß die Zeicheninformation des Hauptspeichers bildelemente-spaltenweise auslesbar ist, daß während jeder Einlese-Phase des Zwischenspeichers die Information einer Bildelementenspalte des Hauptspeichers bit-seriell an ein dem Zwischenspeicher 4 vorgeschaltetes Spalten-Register 4-1 lieferbar ist, und daß die einzelnen den Bildelementen entsprechenden Bits an die Positionen des Zwischenspeichers schreibbar sind, welche über einen Bildelementenzeilenzähler hinsichtlich ihrer Zeilenadresse und über einen Addierer hinsichtlich ihrer Spaltenadresse adressierbar sind, durch den das Produkt einer Multiplizierschaltung, welche an ihren beiden Eingängen mit einem Register zur Speicherung des Faktors D und dem Buchstabenelementenzeilen-Zähler zur Abgabe seines Zählerstandes, verbunden ist, additiv mit dem Zählerstand eines Zählers verknüpfbar ist und daß dieser Zähler über eine mit dem Bildelementenzeilenzähler verbundene Flip-Flop-Schaltung nach einem zweimaligen Umlauf dieses Bildelementenzeilenzählers jeweils einen Zählimpuls erhält und daß während der Auslesephasen des Zwischenspeichers jeweils eine Spalte dieses Zwischenspeichers auslesbar ist, wobei die Adressierung der einzelnen Bits über den Bildelementenzeilenzähler zur Lieferung der Zeilenadresse und den Zähler zur Lieferung der Spaltenadresse durchführbar ist und daß während der Auslesephasen die mit der Flip-Flop-Schaltung verbundene Multiplizierschaltung gesperrt ist.

Diese Steuerschaltung gemäß Fig. 2A erforderte einen relativ hohen schaltungstechnischen Aufwand; außerdem war der — bedingt durch die Verarbeitung der in den Zwischenspeicher (Spaltenspeicher mit Verschiebefunktion) einzulesenden und aus diesem auszulesenden Information — erforderliche Zeitaufwand sehr hoch:

Das Füllen des Hauptspeichers 3 erfordert eine relativ große Zeit. Diese setzt sich aus der Zeit, welche für das Einschreiben der Information erforderlich ist (»reine Schreibzeit«), und der Zeit zusammen, welche zum aufeinanderfolgenden Füllen des dem Hauptspeicher nachgeschalteten Spaltenregisters (4-1 in Fig. 2) aufgebracht werden muß.

(Für Drucker der in Frage kommenden Art wird eine bitserielle Datenübertragung angewendet.)

Wenn der Hauptspeicher 3 gefüllt ist und eine Druckanforderung vorliegt, wird eine Spalte aus 3 in ein dem Spaltenspeicher 4 vorgeschaltetes Spaltenregister 4-1 übertragen (dafür ist ein Zyklus erforderlich); sie wird aus diesem Spaltenregister in x Einlegezyklen (ihre Anzahl entspricht der Zahl der Elektroden) in den Speicher 4 aufbereitet und in x Auslesezyklen aus dem Speicher 4 an die Elektroden ausgelesen.

Es sei in diesem Zusammenhang darauf hingewiesen, daß der Spaltenspeicher mit Verschiebefunktion 4 nicht die Information für eine gesamte Zeile aufnimmt, sondern lediglich eine Breite aufweist, die den Bereich des Elektrodenkopfes abdeckt.

Zur Vermeidung dieser Nachteile ist es Aufgabe der Erfindung, eine Steuerschaltung anzugeben, die einen geringeren schaltungstechnischen Aufwand erfordert und eine schnellere Verarbeitungszeit der Information gestattet.

Diese Aufgabe der Erfindung wird in vorteilhafter Weise durch die im kennzeichnenden Teil des Anspruchs 1 angegebenen Maßnahmen gelöst.

Weitere vorteilhafte Ausbildungen der Erfindung sind den Unteransprüchen zu entnehmen.

Angaben zum Stand der Technik und Ausführungsbeispiele der Erfindung sind in den Zeichnungen dargestellt und werden im folgenden näher beschrieben. Es zeigt

Fig. 1 eine schematische Darstellung einer Steuerschaltung gemäß einem Ausführungsbeispiel der Erfindung zur Aufbereitung von Druckinformation,

Fig. 2A ein schematisches Blockschaltbild zur Darstellung des Informationsflusses zwischen einer zentralen Verarbeitungseinheit und den Schreibkopfelektroden eines Metallpapierdruckers gemäß der deutschen Offenlegungsschrift OS 2 715 889,

Fig. 2B ein schematisches Blockschaltbild zur Darstellung des Informationsflusses zwischen einer zentralen Verarbeitungseinheit und den Schreibkopfelektroden eines Metallpapierdruckers unter Einsatz der erfindungsgemäßen Steuerschaltung,

Fig. 3 eine schematische, auszugsweise Darstellung eines Metallpapierdrucker-Schreibkopfes mit auf einer Schräge angeordneten Elektroden,

Fig. 4 eine schematische Darstellung einer Speicheraufteilung unter Einsatz einer erfindungsgemäßen Steuerschaltung zur Aufbereitung von Druckinformation für Schreibköpfe mit einer sehr hohen Elektrodenzahl,

Fig. 5A, 5B eine schematische Darstellung zur Datenkompression für zu übertragende Druckdaten,

Fig. 6 eine schematische Darstellung einer 1 Byte großen Adreß-Steuerinformation innerhalb komprimierter Druckdaten gemäß Fig. 5,

Fig. 7 eine schematische Darstellung geketteter Adressierungsmodule zur Ansteuerung eines Zwischenspeichers mit Verschiebefunktion.

In Fig. 3 ist ein Metallpapierdrucker-Schreibkopf auszugsweise mit auf einer Schräge angeordneten Elektroden dargestellt. Die Elektroden des in Aufsicht gezeigten Schreibkopfes 100 sind mit E8 und E7 gekennzeichnet. Die gedachte Schräge, auf der die Elektroden E8, E7, . . . liegen, trägt die Kennzeichnung 111. Während des Schreibvorganges bewegt sich der Schreibkopf in angegebener Pfeilrichtung entlang einer Druckzeile. Zur Ausgabe von Druckinformation wird an die einzelnen Elektroden zu entsprechenden Zeitpunkten eine Scheibspannung gelegt, in deren Folge das Metallpapier an den Stellen dieser Elektroden ausgebrannt und somit »beschriftet« wird.

An dem gesamten Schriftbild hat somit jede Elektrode einen »punktförmigen« Anteil. Die auszudruckende Information ist ebenso punktförmig (bitweise) druckbildgerecht zunächst in einem Hauptspeicher einer zentralen Verarbeitungseinheit 1 (siehe Fig. 2A) gespeichert. Wie bei computergesteuerten Metallpapierdruckern üblich, wird diese gespeicherte Information von der zentralen Verarbeitungseinheit 1 über eine Steuereinheit 2 bitseriell in einen Hauptspeicher 3 übertragen. In diesem Hauptspeicher 3 soll diese Information noch druckbildgerecht enthalten sein, d. h. eine entsprechende Aufbereitung der auszugebenden Information unter Berücksichtigung der Schräglage der Elektroden des Schreibkopfes ist zu diesem Zeitpunkt noch nicht erfolgt. Diese Aufbereitung wird erst in einem nachfolgenden Spaltenspeicher 4 (dem ein Spaltenregister 4-1 vorgeschaltet ist) mit Verschiebefunktion vorgenommen, von dem aus die Elektroden mit Druckinformation beaufschlagt werden.

Wie bereits erwähnt, ist diese Anordnung schaltungstechnisch relativ sehr aufwendig; die Informationsverarbeitung im Zwischenspeicher erfordert zudem viel Zeit. Diese Nachteile werden gemäß der in Fig. 2B gezeigten Anordnung vermieden. Der Informationsfluß von der zentralen Verarbeitungseinheit 1 zur Steuereinheit 2 ist der gleiche wie in Fig. 2A, jedoch sind der Hauptspeicher 3 (Fig. 2A) und der Spaltenspeicher 4 (Fig. 2A) zu einem Zeilenspeicher 5 mit Verschiebefunktion (Fig. 2B) zusammengefaßt. Auf diese Weise kann ein separater Spaltenspeicher 4 (Fig. 2A) in der Anordnung nach Fig. 2B entfallen. Es ist jedoch eine entsprechende Ansteuerung des Zeilenspeichers 5 zum Zwecke der Adreßmodifikation für die in diesem Speicher zu verarbeitende Druckinformation vorzugeben. Dabei ist diese Information so aufzubereiten, daß bei ihrer Ausgabe durch die Elektroden wieder ein korrektes Druckbild vorliegt.

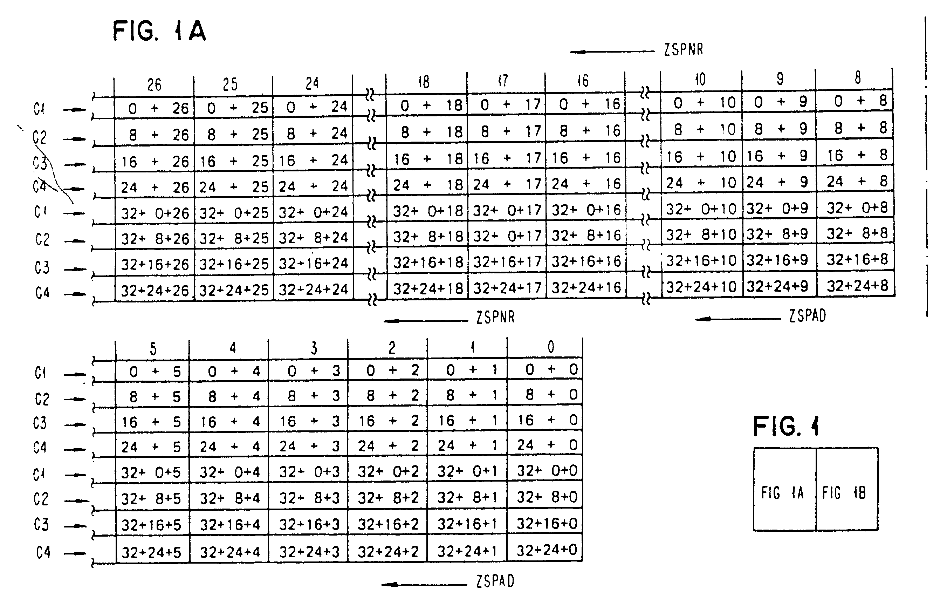

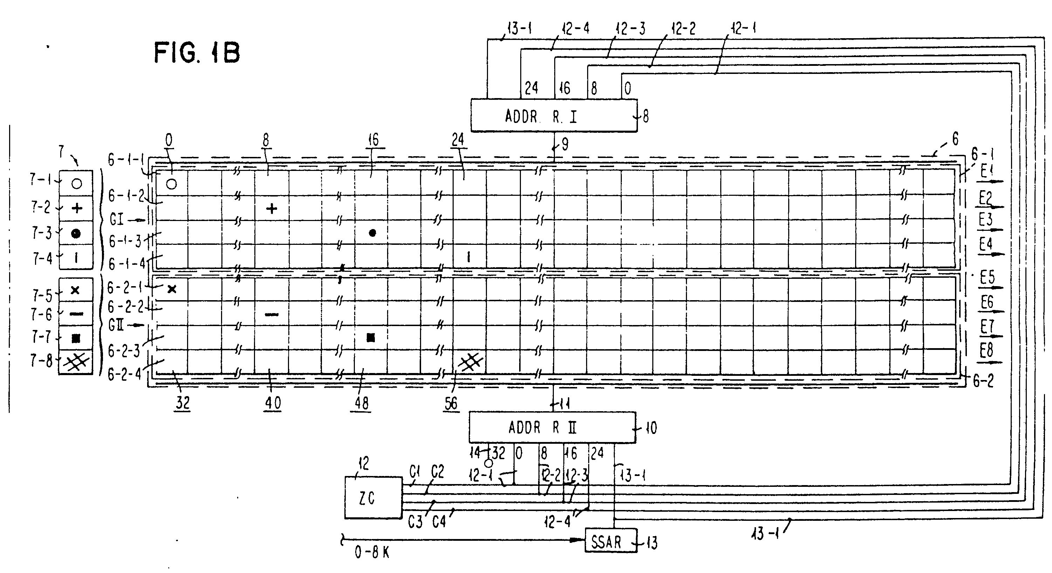

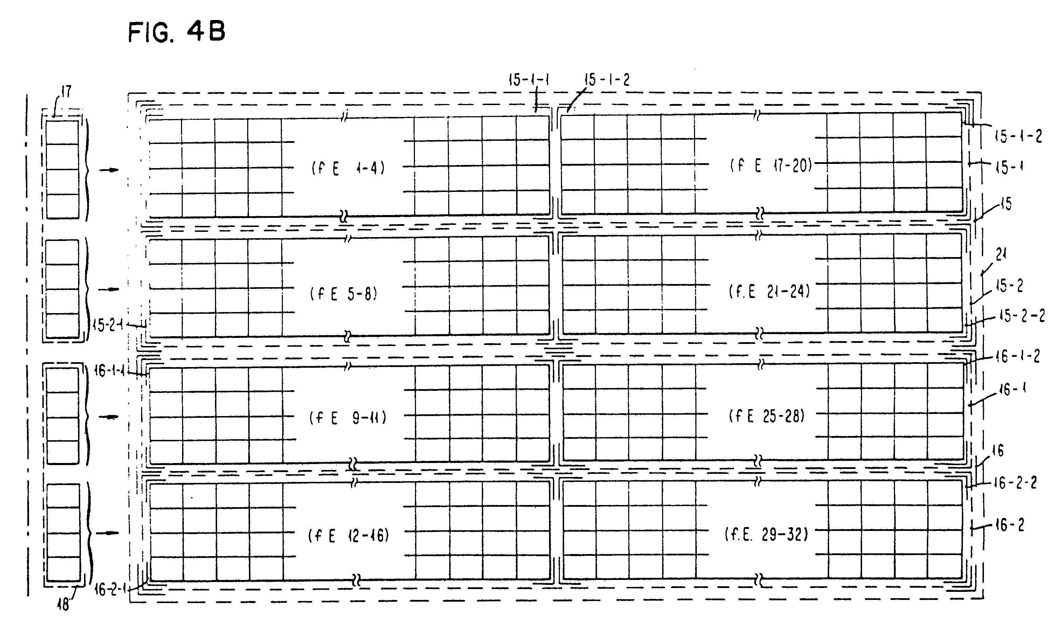

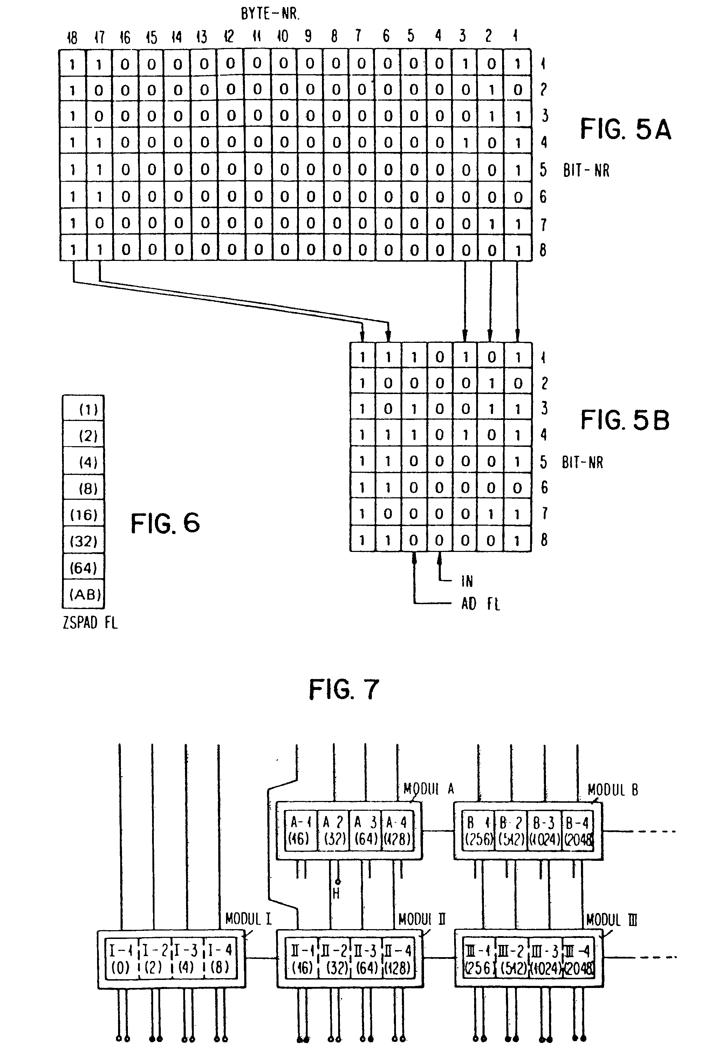

In der Anordnung nach Fig. 2B wird die »Totzeit« (Wartezeit), die sich gemäß Fig. 2A durch die Differenz zwischen der bereits erwähnten »reinen« Schreibzeit zu der »Registerfüllzeit« ergibt, genutzt. Die bitseriell ankommenden Daten (z. B. 20, Fig. 4A) unterliegen einer Seriellparallelwandlung in das Spaltenregister (5-1, 17, 7), welches dem Zeilenspeicher (5 in Fig. 2A, 21 in Fig. 4B, 6 in Fig. 1B) vorgeschaltet ist. Während das Register 20 mit neuen Daten gefüllt wird, werden gleichzeitig dazu die Daten aus dem Spaltenregister in den Zeilenspeicher aufbereitet.

Hierbei wird also die Zeit, die zur Aufbereitung der Daten in den Zeilenspeicher erforderlich ist, in die Register(20)-Füllzeit verlegt. Dadurch ergibt sich im Vergleich zu Fig. 2A ein Zeitvorteil. Die Aufbereitung der Daten aus dem Spaltenregister erfolgt also zeitlich überlappt mit der bitseriellen Übertragung der Daten. In 5 ist im Gegensatz zu 4 die Information für eine gesamte Zeile gespeichert. Mit dem Abschluß der bitseriellen Datenübertragung ist auch die Aufbereitung der Daten in den Speicher 5 abgeschlossen. Wenn der Zeilenspeicher 5 mit Daten gefüllt ist, werden Druckanforderungen für eine Druckspalte akzeptiert. Das Auslesen der Information erfordert einen bzw. zwei Zyklen (einen Zyklus für eine »ungefaltete« Speicherstruktur gemäß Fig. 1B, zwei Zyklen für eine »gefaltete« Speicherstruktur gemäß Fig. 4B). Damit gewinnt man mit der Anordnung gemäß Fig. 2B eine ungleich höhere (im Falle einer ungefalteten Speicherstruktur) bzw. noch höhere (im Falle einer gefalteten Speicherstruktur) Druckgeschwindigkeit als im Falle einer Anordnung nach dem Stand der Technik (Fig. 2A).

Ein weiterer Zeitgewinn für die Aufbereitung der Daten in Speicher 5 ergibt sich durch die gruppenweise Aufteilung in parallel arbeitende Speicherbereiche. (Dieser Vorteil ist für sehr hohe Datenraten bzw. für langsame Speicher wesentlich.) Angenommen, es lägen 32 Elektroden für einen Schreibkopf vor, so würde eine Aufteilung in zwei Gruppen à 16 Elektroden ein Einschreiben der Information in den Speicher 5 (Fig. 2B) nur 16 Speicherzyklen im Gegensatz zu 32 erfordern.

Einzelheiten des Zeilenspeichers 5 mit Verschiebefunktion sind in Fig. 1 dargestellt, in der auch zum besseren Verständnis der Wirkungsweise eine tabellarische Adreßübersicht für die Bitstruktur der zu verarbeitenden Information aufgeführt ist.

Als Beispiel sei davon ausgegangen, daß der Schreibkopf acht Elektroden aufweist (E1 bis E8), die in ihrer horizontalen Projektion jeweils acht Bildpunkte (8 PEL, siehe Fig. 3) voneinander entfernt sind. Diese letztgenannte Zahl 8 (horizontaler Elektrodenversatz) ist maßgebend für die Adreßmodifikation im Zeilenspeicher 6 (Fig. 1), der in der Darstellung nach Fig. 2B mit 5 bezeichnet ist. Dieser Zeilenspeicher 6 ist so organisiert, daß jede seiner Zeilen einer Elektrode zugeordnet ist. Für die in den Speicher 6 einzulesende Information sind in der tabellarischen Übersicht für jedes Bit die Zeilenspeicheradresse ZSPAD angegeben, unter der dieses Bit gespeichert werden soll. Es ist davon auszugehen, daß diese Information zeichenspaltenweise in der Reihenfolge der Zeichenspaltennummern ZSPNR 0, 1, 2, 3 usw. über das Register 7 in den Speicher 6 eingelesen und dort entsprechend aufbereitet wird. (Der Terminus zeichenspaltenweise soll andeuten, daß das fertige Druckzeichen aus einer matrixartig angeordneten Anzahl von Punkten besteht und daß dieses Zeichen somit aus einzelnen Zeichenspalten besteht.) Der Speicher 6 ist aus handelsüblichen, sogenannten Einbit-Speichern zusammengesetzt. Derartige Einbit-Speicher sind als 8K-, 16K-, 32K-Speicher etc. verfügbar. Ein solcher Speicher entspricht jeweils einer Zeile 6-1-1, 6-1-2 etc. in der Speicheranordnung 6. So versteht sich die Speicheranordnung 6 als »Parallelschaltung« mehrerer solcher Einbit-Speicher, die durch ihre Spaltenadresse (z. B. 0, 8, 16 etc.) adressierbar sind. Diese Spaltenadresse entspricht in Wirklichkeit der Bitadresse eines einzelnen Einbit-Speichers. Durch die Tatsache, daß jeder dieser Einbit-Speicher seinen eigenen Schreibbefehl erhält und zwar in der Reihenfolge 6-1-1 parallel zu 6-2-1, 6-1-2 parallel zu 6-2-2, 6-1-3 parallel zu 6-2-3 und 6-1-4 parallel zu 6-2-4 ist jedes Bit innerhalb des Speichers unter Vorgabe der Spaltenadresse adressierbar. Es sei vorausgeschickt, daß der obere Teil des Speichers mit den Zeilen 6-1-1, 6-1-2, 6-1-3 und 6-1-4 getrennt von dem unteren Teil des Speichers 6-2 mit den Zeilen 6-2-1, 6-2-2, 6-2-3 und 6-2-4 adressierbar ist. Für das in Fig. 1 angegebene Beispiel einer 8000 Zeichenspalten umfassenden Druckzeile müßten also insgesamt (gemessen an der Elektrodenzahl 8) acht Einbit-Speicher à 8K gewählt werden, um die gewünschte Speicherstruktur zusammenzusetzen.

Der Speicher 6 ist in eine obere 6-1 und eine untere Speicherhälfte 6-2 aufgeteilt. Jede Spalte der Speicherhälften 6-1 bzw. 6-2 ist durch eine Spaltenadresse adressierbar. Die Spaltenadressen sind, wie bereits erwähnt, durch unterstrichene Zahlen gekennzeichnet (z. B. 0, 8, 16 etc.). Die Speicherspaltenadresse für die obere Speicherhälfte 6-1 wird über das Addierregister 8 die Speicherspaltenadresse für die untere Speicherhälfte 6-2 über das Addierregister 10 vorgegeben. Jede Spalte einer Speicherhälfte soll vereinbarungsgemäß aus je vier Einbit-Speicherstellen bestehen. Die obere Speicherhälfte 6-1 ist so organisiert, daß bei vorgegebener Speicherspaltenadresse mit einem ersten Schreibbefehl die Bitposition in Zeile 6-1-1, mit einem zweiten die Bitposition in Zeile 6-1-2, mit einem dritten die Bitposition in Zeile 6-1-3 und mit einem vierten die Bitposition in Zeile 6-1-4 angesprochen wird. Ein folgender (fünfter) Schreibbefehl würde sich wieder auf die Zeile 6-1-1 beziehen usw. Entsprechendes gilt für die Adressierung der unteren Speicherhälfte 6-2.

Zum besseren Verständnis der Wirkungsweise der in Fig. 1 angegebenen Schaltung sei das Register 7 betrachtet. In dieses Register wird nacheinander die Information für die einzelnen Zeichenspalten mit den Nummern ZSPNR 0, 1, 2 etc. übertragen. Die Übertragung jedes Bits einer Zeichenspalte erfolgt auf die Spaltenadresse der oberen 6-1 bzw. unteren 6-2 Speicherhälfte, wie sie in den einzelnen Tabellenfeldern angegeben ist. Dabei ist gewährleistet, daß jedem Bit einer solchen Zeichenspalte eine entsprechende Speicherzeile im Speicher 6 zugeordnet ist. Auf diese Weise ist gewährleistet, daß jedem Bit einer Zeichenspalte eine nach Zeilen und Spaltenadresse dem Speicher 6 definierte Position zugewiesen wird. Im Gegensatz zu den Adreßhinweisen in den einzelnen Tabellenfeldern ist im Register 7 für die einzelnen Bitpositionen einer Zeichenspalte der Inhalt (nicht die Adresse) angegeben. Von der üblichen Darstellung der Information durch binäre Nullen und Einsen sei hier aus Gründen der Übersichtlichkeit wegen der Vielzahl der einzelnen Bitposition abgesehen. So ist der Inhalt der oberen Bitposition 7-1 durch einen Kreis, der darunterliegenden Bitposition 7-2 durch ein Pluszeichen, der Bitposition 7-3 durch einen ausgefüllten Kreis, der Bitposition 7-4 durch einen senkrechten Strich, der Bitposition 7-5 durch ein Multiplikationszeichen, der Bitposition 7-6 durch einen waagerechten Strich, der Bitposition 7-7 durch ein ausgefülltes Quadrat und der Bitposition 7-8 durch ein Doppelkreuz dargestellt. Dem Speicher 6 ist zu entnehmen, an welche Stellen diese einzelnen Bits geschrieben werden sollen (die Adressen sind der Tabellenspalte für die Zeichenspaltennummer ZSPNR, z. B. 0, zu entnehmen). Das Einschreiben der Registerinformation in den Speicher 6 unterliegt einem bestimmten Prinzip und ist der Speicherunterteilung in die beiden Hälften 6-1 und 6-2 angepaßt. Die im Register 7 stehende Information wird in eine aus den oberen vier Bits 7-1 bis 7-4 bestehende Gruppe GI und in eine andere aus den unteren vier Bits 7-5 bis 7-8 bestehende Gruppe GII aufgegliedert. Die Information der Gruppe GI wird in die obere Speicherhälfte 6-1 und die der Gruppe GII in die untere Speicherhälfte 6-2 geschrieben. Das Einschreiben der Information aus beiden Gruppen erfolgt gleichzeitig bitseriell. Dies ist so zu verstehen, daß mit einem ersten Schreibbefehl für 6-1 bzw. 6-2 die Information des ersten Bits 7-1 in die Zeile 6-1-1 der Speicherspaltenadresse 0 und die Information des fünften Bits 7-5 in die Zeile 6-2-1 der Speicherspaltenadresse 32 geschrieben wird. Mit dem zweiten Schreibbefehl für 6-1 bzw. 6-2 gelangt die Information des zweiten Bits 7-2 der ersten Gruppe GI in die Zeile 6-1-2 der Speicherspaltenadresse 8 und die Information des sechsten Bits 7-6 der Gruppe GII in die Zeile 6-2-2 der Speicherspaltenadresse 40 etc., so daß nach Ausführung des vierten Schreibbefehls sowohl für die obere als auch für die untere Speicherhälfte die Information aus dem Register 7 vollends auf den Speicher 6 verteilt wurde und zwar in einer Weise, daß sich beim späteren Auslesen dieser Information aus dem Speicher 6 an die Elektroden E1 bis E8 ein druckgerechtes Bild ergibt. Nach erfolgter Übertragung der Information einer Spalte aus dem Register 7 in den Speicher 6 folgt die Übertragung der Zeichenspalte mit der nächsthöheren Nummer in das Register 7. Von dort aus wird die Information wieder in den Speicher 6 übertragen und zwar auf die in der tabellarischen Aufstellung unter der entsprechenden Zeichenspaltennummer angegebenen Adressen des Speichers 6. Der tabellarischen Übersicht in Fig. 1 ist zu entnehmen, daß die Speicheradressen für die einzelnen Bits der Zeichenspalten nach einem ganz bestimmten Schema gebildet werden: Für die Bitpositionen der Gruppe GI ergibt sich die Adresse jeweils aus der Summation der Werte 0 oder 8 oder 16 oder 24 mit dem Wert der Zeichenspaltennummer. Die Größe der ersten Summanden geht auf Vielfache des Wertes 8 und somit auf den horizontalen Elektrodenversatz zurück. Für die Adreßbildung für die Bitpositionen der Gruppe GII werden drei Summanden herangezogen: Der erste Summand ist der konstante Wert 32, der durch die Auswahl der Speicherstruktur im Zusammenhang mit dem horizontalen Elektrodenversatz bestimmt ist. Als zweiter Summand erscheint für jede Bitposition der bei der Adreßbildung der Bits für die Gruppe GI maßgebliche Wert 0 oder 8 oder 16 oder 24. Als dritter Summand tritt wiederum für jede Bitposition der Gruppe GII die Zeichenspaltennummer auf. Die Übertragung der Information aus dem Register 7 in die beiden Speicherhälften 6-1 bzw. 6-2 erfolgt bitweise in den Zyklen C1, C2, C3 und C4. Während eines Zyklus wird jeweils ein Bit aus den Gruppen GI und GII gleichzeitig übertragen.

Es sei jetzt auf die schaltungstechnischen Einzelheiten eingegangen, die eine entsprechende Adreßmodifikation während des Einschreibvorganges sicherstellen. Die Speicherspaltenadressierung der oberen Speicherhälfte 6-1 wird von dem Addierregister 8, die der unteren Speicherhälfte 6-2 vom Addierregister 10 veranlaßt. Jedes dieser Register 8, 10 erhält über die Leitungen 13-1 vom Speicherspalten-Adreßregister 13 eine fortlaufende Speicherspaltenadresse zugewiesen. Der Registerstand im Register 13 ist mit der Zeichenspaltennummer ZSPNR identisch. Der Adreßumfang des Registers 13 muß der möglichen Anzahl der Speicherspalten pro Druckzeile entsprechen (z. B. 8K). Da die Schreibkopfelektroden jeweils um 8 PEL in horizontaler Projektion gegeneinander versetzt sind, ergibt sich für die fünfte Elektrode E5 ein horizontaler Versatz von 32 PEL gegenüber der ersten Elektrode E1. Dies ist der Grund, weshalb das Addierregister 10 neben dem Eingang 13-1 vom Register 13 einen weiteren Eingang 14 aufweist, über welchen der Adreßwert +32 zugewiesen wird. Des weiteren ist jedes der Addierregister 8 und 10 mit einer Reihe weiterer Eingänge 12-1 für den Wert +0, 12-2 für den Wert +8, 12-3 für den Wert +16 und 12-4 für den Wert +24 ausgestattet. Diese Werte verstehen sich als Vielfache des horizontalen Elektrodenversatzes von 8 PEL. Die Eingangsleitungen 12-1 für den Wert +0 sind während eines ersten Zyklus 1 aktiviert, die (12-2) für den Wert +8 während eines Zyklus 2, die (12-3) für den Wert +16 während eines Zyklus 3 und die (12-4) für den Wert +24 während eines Zyklus 4. Für die Aktivierung der Addierregistereingänge 12-1 bis 12-4 während der einzelnen Zyklen ist eine Zyklussteuerung 12 vorgesehen. Es wurde bereits darauf hingewiesen, daß die Information der einzelnen Zeichenspalten nacheinander in das Register 7 gestellt wird. Von dort aus erfolgt die Verarbeitung der Information parallel in zwei Gruppen GI und GII, wobei die Information jeder Gruppe seriell in die ihr zugeordnete Speicherhälfte 6-1 bzw. 6-2 geschrieben wird. Unter Beachtung der voranstehenden Erläuterungen ergeben sich beispielsweise, daß die Information des dritten Bits 7-3 der Gruppe GI für die Zeichenspalte mit der Nummer 17 für das Addierregister 8 folgende Eingangswerte:

| Leitung | Wert |
| --- | --- |
| 13-1 | 17 |
| 12-1 | 0 |
| 12-2 | 0 |
| 12-3 | 16 |
| 12-4 | 0 |

d. h., die Information des Bits 7-3 der Zeichenspalte mit der Nummer ZSPNR = 17 wird auf die Adresse 16 + 17 = 33 der Zeile 6-1-3 übertragen. Die Darstellung der Zyklussteuerung 12 mit ihren vier Ausgängen C1 für den Zyklus 1, C2 für den Zyklus 2, C3 für den Zyklus 3 und C4 für den Zyklus 4, dient lediglich der Veranschaulichung. Aus praktischer Sicht wird man eine solche Zyklussteuerung als zweistufigen binären Zähler aufbauen, wobei die Ausgangsleitung für den Zählwert 0 entfällt. Es würden somit lediglich zwei Ausgangsleitungen für die Werte +8 und +16 erforderlich sein, wobei der Wert +24 durch die Kombination dieser beiden erstgenannten Ausgangsleitungen angezeigt würde. Nach dem Zyklus 3 für den Wert +24 würde in der darauffolgenden Zählerstellung ein Übertragssignal auftreten, das auf das Register 13 geleitet den Inhalt dieses Registers um 1 erhöhen würde. Diese letztgenannte Verbindung wurde aus Gründen der Übersicht in Fig. 1 nicht dargestellt.

Der Grundtakt der Schaltung dient der Weiterschaltung der Zyklussteuerung 12. Die Übertragspulse der als zweistufiger Binärzähler realisierbaren Zyklussteuerung 12 dienen wiederum der Weiterschaltung des Registers 13. Das Addierregister 10 hat im Vergleich zu dem Addierregister 8 einen weiteren Eingang 14 für den Wert +32. Die Darstellung der Register 8 und 10 in Fig. 1 mit mehreren Eingängen ist nur prinzipiell zu verstehen. Praktisch können solche Addierregister aus mehreren im Handel verfügbaren Addiermodulen aufgebaut werden.

In Fig. 7 ist gezeigt, wie mit Hilfe sogenannter Vierbit-Addierermodule eine Speicheradressierung vorgenommen werden kann. Als problematisch erweist es sich dabei, daß jede Stufe eines solchen Vierbit-Addierers nicht mehr als zwei Eingänge aufweisen kann. Somit wäre es also nicht möglich, eine einzige Stufe mit drei Eingängen zu versehen, eine z. B. für den konstanten Wert +32, eine andere für eine Speicherspaltenadresse und eine dritte für einen Wert zur Berücksichtigung der Schräglage der Elektroden (im Beispiel nach Fig. 1 wäre der letztgenannte Wert mit der während der Zyklen C1 bis C4 vorzugebenden Größe +0 oder +8 oder +16 oder +24 gleichzusetzen). Die in Fig. 7 gezeigte Anordnung besteht aus mehreren in Kette geschalteten Modulen I, II, III etc. Der Modul I weist die Stufen I-1, I-2, I-3, I-4 auf, welche den Wertstufen (0), (2), (4) und (8) zugeordnet sind. Jede Stufe hat zwei Addiereingänge und einen Ausgang. Für die dem Modul I nachgeschalteten Module II und Modul III gilt analoges, wobei die einzelnen Zählerstufen II-1, II-2, II-3, II-4, III-1, III-2, III-3, III-4 den Wertstufen (16), (32), (64), (128), (256), (512), (1024), (2048) zugeordnet sind. Die Additionslogik solcher Vierbit-Addiermodule ist herkömmlicher Art und deshalb nicht näher dargestellt. Die Addiervorgänge erfolgen pro Stufe, Überträge auf die nächsthöhere Wertstufe bzw. auf den nachfolgenden Modul werden entsprechend berücksichtigt. Um bei der Adressierung, z. B. der Speicherhälfte 6-2 auch noch den konstanten Wert +32 (Leitung 14 in Fig. 1) zu berücksichtigen, muß die in Fig. 7 dargestellte Kettenschaltung der Module I, II und III eine Erweiterung erfahren. Zu diesem Zweck ist eine weitere Kettenschaltung anderer Module A, B etc. vorgesehen. Der Modul A besteht aus den Binärstufen A-1, A-2, A-3, A-4 mit den Wertzuweisungen (16), (32), (64), (128). Die Ausgangsleitungen der Stufen II-2, II-3 und II-4 des Moduls II bilden Eingangsleitungen für die Stufen A-2, A-3, A-4 des Moduls A. Die zweite Eingangsleitung H für die Stufe A-2 wird dann aktiviert, wenn es gilt, den konstanten Wert +32 zu addieren. Alle anderen Eingangsleitungen des Moduls A werden nicht erregt. Die Stufe A-1 des Moduls A bleibt unbenutzt, weil auf die Ausgangsleitung

der Stufe II-1 (bei einer Schaltung gemäß Fig. 1) kein dritter Wert zu addieren ist. Durch das Auftreten von Überträgen in der Stufe A-2 des Moduls A bedingt, ist dem Modul A ein weiterer Modul B etc. nachgeschaltet, dessen einzelne Stufen B-1, B-2, B-3 und B-4 mit den entsprechenden Ausgangsleitungen der Stufen III-1, III-2, III-3 und III-4 des Moduls III verbunden sind. Die jeweils zweite Eingangsleitung der Stufen des Moduls B bleibt unbenutzt; Überträge vom Modul A zum Modul B werden modulintern entsprechend berücksichtigt. Die gewünschte Endadresse steht somit an den Ausgangsleitungen des Moduls I, der Stufe II-1 des Moduls II, der Stufen A-2 bis A-4 des Moduls A sowie der Stufen des Moduls B etc. zur Verfügung. Bei einer derartigen gekettelten Anordnung von Vierbit-Addierermodulen ist eine beliebige Speicheradressierung auch für hohe Adressen möglich.

Nach dem Einschreiben der Information für eine gesamte Druckzeile in den Speicher 6 erfolgt die Ausgabe dieser Information an die einzelnen Elektroden E1 bis E8 des Druckschreibkopfes. Das Auslesen jeweils einer Spalte der beiden Speicherhälften 6-1 und 6-2 erfolgt gleichzeitig. Während des Auslesevorganges sind die Leitungen 14, 12-1, 12-2, 12-3 und 12-4 der Addierregister 8 und 10 nicht aktiviert. Unter Vorgabe der Zeichenspaltennummer über das Register 13 erfolgt der Auslesevorgang der Information aus den beiden Speicherhälften 6-1 und 6-2.

In Fig. 4 ist eine schematische Darstellung eines Zeilenspeichers 21 mit Verschiebefunktion für einen Schreibkopf mit einer größeren Anzahl von Elektroden, nämlich 32, angegeben. Dieser Speicher 21 soll wiederum aus im Handel verfügbaren Einbit-Speichern zusammengesetzt werden. Diese Einbit-Speicher sollen, wie nachfolgend erklärt, eine Kapazität von jeweils 16K aufweisen. Die Einbit-Speicher repräsentieren sich als Zeilen in der Speicheranordnung 21. Dabei sind jeweils acht dieser parallel geschalteten Einbit-Speicher zu einer sogenannten Untergruppe 15 bzw. 16 zusammengefaßt. Jede dieser Untergruppen weist wiederum eine Unterteilung in eine obere und untere Speicherhälfte 15-1; 15-2 bzw. 16-1 und 16-2 auf. Die Zeilenlänge innerhalb dieser Speicherhälften entspricht der Kapazität von 16K, der für den Speicheraufbau verwendeten Einbit-Speicher. Innerhalb der oberen und unteren Speicherhälfte 15-1, 15-2, 16-1 und 16-2 erfolgt eine Aufteilung in linke und rechte Speicherteile, die entsprechend mit 15-1-1, 15-1-2; 15-2-1, 15-2-2; 16-1-1, 16-1-2 und 16-2-1, 16-2-2 gekennzeichnet sind. Diese Speicheraufteilung dient der Bildung bestimmter Speicherbereiche, die die Information für bestimmte Elektroden des Schreibkopfes aufnehmen sollen. Der Speicherbereich 15-1-1 ist den Elektroden 1 bis 4, der Speicherbereich 15-2-1 ist den Elektroden 5 bis 8, der Speicherbereich 16-1-1 den Elektroden 9 bis 11, der Speicherbereich 16-2-1 den Elektroden 12 bis 16, der Speicherbereich 15-1-2 den Elektroden 17 bis 20, der cherbereich 15-2-2 den Elektroden 21 bis 24, der Speicherbereich 16-1-2 den Elektroden 25 bis 28 und der Speicherbereich 16-2-2 den Elektroden 29 bis 32 zugeordnet. In diese einzelnen Speicherbereiche ist die Information für eine gesamte Zeilenlänge aufzunehmen. Bei einer vorgegebenen Zeilenlänge von insgesamt 8K Zeichenspalten ergibt sich unter Zugrundelegung dieser Speicheraufteilung für 2 × 16 Elektroden zwangsläufig, daß die für den Aufbau verwendeten Einbit-Speicher eine Kapazität von jeweils 16K haben müssen. In Analogie zu der Darstellung in Fig. 1 hat jeder Speicherteil 15-1, 15-2, 16-1 und 16-2 sein eigenes Additionsregister zur Adressierung. Diese Additionsregister sind jedoch aus Gründen der Übersicht nicht dargestellt. Über diese Register sind unter Vorgabe der entsprechenden Spaltenadresse die einzelnen Speicherbereiche ansteuerbar, während die einzelnen Bits innerhalb der Spaltenadreßposition durch die Folge der Schreibbefehle für die einzelnen Zeilen der Speicherteile 15-1, 15-2, 16-1 und 16-2 adressierbar sind (in Analogie zum Speicher 6, Fig. 1).

Das Einschreiben der Information in diesen Speicher 21 erfolgt in prinzipiell der gleichen Weise wie in Zusammenhang mit Fig. 1 beschrieben. Die in jeder Speichergruppe 15 bzw. 16 einzuschreibende Information stammt aus einem Register 17 bzw. 18. In diese Register werden in folgender Weise die Informationen für eine Zeichenspalte aufgenommen und unter entsprechender Adreßsteuerung in die verschiedenen Speicherbereiche geschrieben:

In einer ersten Phase erhält das Register 17 die Zeichenspalteninformation für die Elektroden 1 bis 8, gleichzeitig erhält das Register 18 die Zeichenspalteninformation für die Elektroden 9 bis 16. Nach Ausgabe dieser Information in die einzelnen entsprechenden Speicherbereiche erhält das Register 17 die Zeichenspalteninformation für die Elektroden 17 bis 24, während der gleichen Zeit erhält das Register 18 die Zeichenspalteninformation für die Elektroden 25 bis 32. Wie auch in Fig. 1 ist die Information jedes Registers 17, 18 jeweils in zwei Gruppen à 4 Bit aufgeteilt.

Das Einschreiben der Information (Phase 1) aus dem Register 17 in die Speicherbereiche 15-1-1 und 15-2-1 unterliegt dem gleichen Prinzip wie im Zusammenhang mit Fig. 1 beschrieben. Gleichzeitig läuft das entsprechende Einschreiben der Information aus dem Register 18 in die Speicherbereiche 16-1-1 und 16-2-1 ab. Aus Gründen der Vereinfachung ist auf die Darstellung der Adreßmodifikation während des Schreibvorganges verzichtet worden. Diese Adreßmodifikation erhält jedoch eine Erweiterung für die Information der Phase 2, welche aus dem Register 17 in die Speicherbereiche 15-1-2 und 15-2-2 bzw. aus dem Register 18 in die Speicherbereiche 16-1-2 und 16-2-2 eingeschrieben wird. Hierbei ist die Adresse des Additionsadreßregisters für die einzelnen Speicherbereiche zusätzlich um 8K zu erhöhen, da die gesamte Speicherzeilenlänge in zwei gleiche Teile à 8K

unterteilt ist. Das Aufschalten bestimmter Werte in ein Additionsadreßregister kann gemäß der Darstellung in Fig. 7 vorgenommen werden.

Die von der Zentraleinheit stammende, auszugebende Information wird bitseriell auf Leitung 19 angeliefert. Die Umsetzung dieser bitseriellen Information in für das Einschreiben in den Speicher 21 geeignete 8-Bit-Information erfolgt mit Hilfe üblicher Registeranordnungen 20, auf die hier nicht näher eingegangen werden soll. In der Anordnung 20 wird die Information so organisiert, daß sie in jeweils 8-Bit-»Paketen« für die Elektroden 1 bis 8, 9 bis 16, 17 bis 24 und 25 bis 32 erscheint. Diese einzelnen 8-Bit-Pakete sind mit 20-15-1/8, 20-15-9/16, 20-16-17/24 und 20-16-24/32 gekennzeichnet.

Nach der Eingabe der Information für eine gesamte Schreibzeile in den Speicher 21 erfolgt die Ausgabe dieser Information an die einzelnen Schreibelektroden. Die besondere Aufteilung des Speichers erfordert ein Auslesen in zwei Phasen A und B. Während der ersten Phase A wird unter Vorgabe der Spaltenadresse für die Speicherbereiche 15-1-1, 15-2-1, 16-1-1 und 16-2-1 die Information für die Elektroden 1 bis 16 ausgelesen und in einem Ausgaberegister (nicht dargestellt) zwischengespeichert. Die für diese Spalte noch ausstehende Information für die Elektroden 17 bis 32 wird während der zweiten Auslesephase B unter Vorgabe der entsprechenden Spaltenadressen aus den Speicherbereichen 15-1-2, 15-2-1, 16-1-2 und 16-2-2 in die dafür vorbestimmten Positionen des Ausgaberegisters ausgelesen, das danach seine Gesamtinformation parallel an die einzelnen, seinen Positionen zugeordneten Schreibelektroden ausgibt.

Die in Fig. 4B dargestellte Registeranordnung 17, 18 läßt sich unter bestimmten Umständen vereinfachen, so daß letztlich nur noch ein 8 Stufen umfassendes Register zur Adressierung des Speichers 21 erforderlich wäre. Die Vereinfachung des damit verbundenen Schaltungsaufwandes liegt nicht nur in der Einsparung eines Registers, sondern auch in einer Minimierung der für die einzelnen Speicherbereiche 15-1-1/ 15-2-1, 16-1-1/16-2-1; 15-1-2/15-2-2; 16-1-2/16-2-2 erforderlichen Adreßschaltungen. Für jeden dieser genannten Speicherbereiche könnte die gleiche Adressierschaltung (natürlich in zeitlicher Aufeinanderfolge) benutzt werden. (Aus Gründen der Vereinfachung sollen die genannten Speicherbereiche im folgenden Speicherviertel genannt werden.)

Dies setzt jedoch voraus, daß im Datenstrom, welcher über das zuvor erwähnte, dann einzige Register läuft, auch entsprechende Adreßhinweise vorhanden sind, die zur Ansteuerung der Speicherviertel Verwendung finden.

Zunächst sei, wie in Fig. 5A und B dargestellt, auf die Möglichkeit einer Kompression des Datenstromes eingegangen. Bei zu übertragenden Druckdaten treten häufig Felder auf, in denen durchweg immer die gleiche Information enthalten ist. Um Übertragungszeit und Übertragungskapazität einzusparen, bietet sich die Datenkompression derartiger Felder an. In den Fig. 5A und 5B ist die Kompression eines solchen Feldes mit binären Nullen dargestellt. (Angenommen, es stünde der Speicher 21 gemäß Fig. 4B zur Datenaufbereitung zur Verfügung, und es sollte nur ein — insgesamt 8 Bit großes — Register zur Pufferung der in diesen Speicher einzugebenden Daten verwendet werden.)

Der Beginn des Feldes mit durchweg binären Nullen (siehe Fig. 5A) wird in der komprimierten Form der Druckdaten gemäß Fig. 5B mit einer Zeichenspalte IN angegeben, die ebenfalls durchweg binäre Nullen enthält. Die Länge des Feldes binärer Nullen in Fig. 5A beträgt 13 Zeichenspalten. Diese Längenangabe wird (binär verschlüsselt) in der nach der Zeichenspalte IN folgenden Zeichenspalte AD · FL vermerkt. Bei einem 8 Bit breiten Datenstrom ließen sich in einer solchen Angabe insgesamt $127 \cdot (=2^7-1)$ Zeichenspalten erfassen, wenn das achte Bit anderen Zwecken vorbehalten bleibt. (Würde sich das zu komprimierende Datenfeld über eine größere Anzahl als 127 Zeichenspalten erstrecken, so müßten in der komprimierten Form die Angaben IN und AD · FL mehrfach gekettet werden.) Träte nun in einem derart komprimierten Datenstrom eine Zeichenspalte mit durchweg binären Nullen auf — was durch eine entsprechende Detektorschaltung angezeigt werden kann —, so würde die nachfolgende AD · FL-Information für einen entsprechenden Adreßsprung durch Ansteuerung der Speicherspalten-Adreßregister für die Adressierung der Speicherviertel benutzt werden.

Wenn vor Beginn der Datenübertragung in den Speicher 21 derselbe auf durchweg binär Null gelöscht würde, brauchten Datenfelder mit durchweg binären Nullen bei der Aufbereitung der Druckdaten in diesen Speicher nicht mehr geschrieben zu werden. Diese Maßnahme wird durch den bereits erwähnten Adreßsprung berücksichtigt. Die Anzeige für das Auftreten durchweg binärer Nullen in einer Zeichenspalte und die Übermittlung der darauffolgenden Feldlängeninformation AD · FL an Additionsregister für die Adressierung der Speicherviertel, gehören zu üblichen Maßnahmen, so daß hierauf nicht näher eingegangen wird. In der auf IN folgenden Zeichenspalte (Fig. 5B) kann alternativ zur Feldlängeninformation auch ein anderer Adreßhinweis gespeichert sein, nämlich der, welches Speicherviertel zu adressieren ist. Zur Unterscheidung beider Möglichkeiten sei auf die Prinzipdarstellung in Fig. 6 verwiesen. Dort sind die einzelnen Bits einer 1 Byte (8 Bits) breiten Adreßinformation dargestellt. In der untersten Stufe (mit AB gekennzeichnet) wird binär die Angabe gespeichert, ob es sich bei der Angabe in den oberen sieben Bits (mit den Wertstufen (1) bis (64)) um eine Feldlängenangabe handelt oder um einen Adreßhinweis für das anzusteuernde Speicherviertel. Angaben dieser Art werden programmgesteuert in den zu komprimierenden Datenstrom eingefügt.

Außerdem sei bemerkt, daß bei Verwendung der beschriebenen Datenkompression in Verbindung mit einem Speicher 21, welcher nur über ein einziges 8 Bit breites Datenregister anzusteuern ist, der Datenstrom in besonderer Weise zu organisieren ist:

Danach muß die in einzelne Speicherbereiche einzugebende Information in der Folge ihrer Eingabe blockweise bereitgestellt werden (ein solcher Datenblock stellt die gesamte in den Speicherbereich einzugebende Information dar).

## Patentansprüche

1. Steuerschaltung zur Aufbereitung von Druckdaten für Metallpapierdrucker mit Vielfach-Elektrodenschreibköpfen, bei denen die Elektroden auf einer Schräge angeordnet sind,
mit einem Speicher (6), in dem jede Zeile einer Elektrode zugeordnet ist und
wobei über ein Serienregister (20) und ein Parallelregister (7) eine Serienparallelwandlung der bitseriell lieferbaren Druckdaten erfolgt,
mit einer die Schräglage der Elektroden berücksichtigenden Adreßsteuerung (8, 10, 12, 13) zum Einlesen der Druckdaten in den Speicher,
wobei der Speicher aus der zeilenweisen Parallelschaltung von Registern aus hintereinander geschalteten Registerstufen besteht und
jede Registerstufe adressierbar ist und
beim Einlesen/Auslesen der Druckdaten bei aufeinanderfolgender Zeilenadressierung in den aus dem Speicher (6) über ein dem Speicher zugeordnetes Addierregister (8; 10) jeweils eine vorgegebene Spaltenadresse (Registerstufe) ansteuerbar ist,
dadurch gekennzeichnet,
daß die Daten in dem Parallelregister (7) in Gruppen (GI, GII) aufgeteilt sind, wobei jeder Gruppe (GI, GII) ein Teilspeicher (6-1, 6-2) des Speichers (6) mit jeweils $k_G$ Zeilen ($k_G$ = Anzahl der Elektroden, die von einer Gruppe des Speichers versorgt werden) und p der Länge einer Druckzeile entsprechenden Anzahl von Spalten zugeordnet ist,
daß die Bits gleicher Position in allen Gruppen (GI, GII) gleichzeitig parallel eingelesen werden, und daß das Auslesen der Druckdaten für die Elektroden aus den Speichern (6-1, 6-2) gleichzeitig spaltenweise bitparallel erfolgt.

2. Anordnung nach Anspruch 1, dadurch gekennzeichnet, daß die Addierregister (8, 10) über ein Speicherspaltenadreßregister (13) mit einer fortlaufenden Spalten(Registerstufen)-Adresse, und von einer den Einschreibvorgang steuernden Zyklussteuerschaltung (12) mit die Schräglage der Elektroden berücksichtigenden Adreßwerten und wahlweise mit einer die Elektrodenanzahl berücksichtigenden Adreßkonstanten beaufschlagbar sind.

3. Anordnung nach Anspruch 1, dadurch gekennzeichnet,
daß bei einer als Potenz zur Basis 2 darstellbaren Elektrodenanzahl k und bei einem als das n-fache des Elektrodendurchmessers ausdrückba-

ren horizontalen Elektrodenversatz die Zyklus-steuerschaltung (12) ein Binärzähler ist, der bis zum Produkt aus n und dieser Potenz zählt und dessen Überlaufpulse das Speicherspaltenadreßregister (13) beaufschlagen und

daß die Addierregister (8, 10) aus einer ersten Kettenschaltung binärer Addierstufen bestehen, deren Ausgänge — beginnend bei einer von der Größe einer zu summierenden Adreßkonstanten abhängigen Wertstufe — wiederum einer zwei-ten Kettenschaltung binärer Addierstufen zu-führbar sind, wobei jede Addierstufe zwei Eingänge hat.

4. Anordnung nach einem der Ansprüche 1 bis 3, dadurch gekennzeichnet, daß für eine große Elektrodenanzahl die Speicher (15-1, 15-2, 16-1, 16-2) in Teilbereiche (15-1-1, 15-1-2; 15-2-1,15-2-2; 16-1-1, 16-1-2; 16-2-1, 16-2-2) mit jeweils halber Speicherzeilenlänge aufgegliedert sind und daß die Zeilen jedes Teilspeichers bestimmten Elektroden zugeordnet sind.

5. Anordnung nach Anspruch 4, dadurch gekennzeichnet, daß jedem Speicher (15-1, 15-2, 16-1, 16-2) der einer Datengruppe entsprechende Teil eines Eingaberegisters (17, 18) fest zugeordnet ist.

6. Anordnung nach Anspruch 4, dadurch gekennzeichnet, daß nur ein Eingaberegister vorgesehen ist, welches nacheinander den verschiedenen Speichern (15-1, 15-2, 16-1, 16-2) zugeordnet wird.

7. Anordnung nach einem der Ansprüche 1 bis 6, dadurch gekennzeichnet, daß zur Aufbereitung komprimierter Druckdaten ohne nicht signifikante Information, welche im Datenstrom unter Angabe ihrer Art und ihrer Feldlänge gekennzeichnet ist, in die Gesamtheit (21) aller Speicher vor der Druckdatenaufnahme durchweg nicht signifikante Information eingeschrieben wird.

8. Anordnung nach Anspruch 7, dadurch gekennzeichnet, daß der Datenstrom entsprechend den nacheinander anzusteuernden Speicherteilbereichen (15-1-1, 15-2-1; 16-1-1, 16-2-1; 15-1-2, 15-2-2; 16-1-2, 16-2-2) gemäß den diesen Berei-chen zugeordneten Elektroden blockweise orga-nisiert ist.

## Claims

1. Control circuit for editing printing data for metal paper printers with multiple electrode print heads where the electrodes are arranged on a slope,
with a storage (6) having each row associated to an electrode, and
where via a series register (20) and a parallel register (7) there is a series-parallel conversion of the bit-serially applicable print data,
with an adress control (8, 10, 12, 13) taking into consideration the electrode slope, for entering the print data into the storage,
with the storage consisting of the row-wise parallel arrangement of registers of series-arranged register stages, and
each register stage being addressable, and wherein upon the reading in/out of the print data, in successive row addressing into the/out of the storage (6) one respective predetermined column address (register stage) is addressable via an adder register (8; 10) associated to the storage,
characterized in that
the data in the parallel register (7) are divided into groups (GI, GII), each group (GI, GII) having associated thereto a part storage (6-1, 6-2) of the storage (6) with respectively $k_G$ rows ($k_G$ = number of electrodes supplied by a group of the storage), and a number of columns p corresponding to the lenght of a print row,
that the bits of the same position in all groups (GI, GII) are read in simultaneously in parallel, and that the reading out of the print data for the electrodes of the storages (6-1, 6-2) takes place simultaneously column-wise and in bit parallel mode.

2. Arrangement as claimed in claim 1, characterized in that the adder registers (8, 10) are applicable via a storage column address register (13) with a continuous column (register stage) address, and by a cycle control circuit (12) controlling the writing-in process with address values, taking into consideration the electrode slope, and selectively with an address constant taking into consideration the number of electrodes.

3. Arrangement as claimed in claim 1, characterized in that with an electrode number k representable as a power of basis 2, and with an electrode staggering expressable as the n-fold of the electrode diameter, the cycle control circuit (12) is a binary counter which counts up to the product of n and this power, and whose overflow pulses are applied to the storage column address register (13), and that the adder registers (8, 10) consist of a first series arrangement of binary adders whose outputs — beginning with a value-weighted stage depending on the size of an address constant to be summed up — are again applicable to a second series arrangement of binary adder stages, each adder stage having two inputs.

4. Arrangement as claimed in one of claims 1 to 3, characterized in that for a large electrode number the storages (15-1, 15-2, 16-1, 16-2) are subdivided into part areas (15-1-1, 15-1-2; 15-2-1, 15-2-2; 16-1-1, 16-1-2; 16-2-1, 16-2-2) each with half a storage row length, and that the rows of each partial storage are associated to predetermined electrodes.

5. Arrangement as claimed in claim 4, characterized in that the part of an input register (17, 18) that corresponds to a data group is fixedly associated to each storage (15-1, 15-2, 16-1, 16-2).

6. Arrangement as claimed in claim 4, characterized in that only one input register is provided which is successively associated to the various storages (15-1, 15-2, 16-1, 16-2).

7. Arrangement as claimed in one of claims 1 to 6, characterized in that for editing compressed printing data without non-significant information characterized in the data flow with regard to type and field length, non-significant information exclusively is entered into all (21) storages prior to the receiving of printing data.

8. Arrangement as claimed in claim 7, characterized in that the data flow is organized blockwise in accordance with the storage part areas (15-1-1, 15-2-1; 16-1-1, 16-2-1; 15-1-2, 15-2-2; 16-1-2, 16-2-2) to be controlled successively following the electrodes associated to these areas.

## Revendications

1. Circuit de commande pour préparer des données à imprimer sur un support de papier métallisé au moyen de têtes d'impression comportant de multiples électrodes, où les électrodes sont disposées sur une oblique,
comportant une mémoire (6) où chaque ligne est associée à une électrode,
où une conversion sériel-parallèle des données à imprimer transmises en série par bit est réalisée au moyen d'un registre sériel (20) et d'un registre parallèle (7),
comportant un adressage (8, 10, 12, 13) tenant compte de l'agencement oblique desdites électrodes afin de lire lesdites données à imprimer dans la mémoire,
où la mémoire est constituée par le montage en parallèle et arrangée en lignes de lignes de registres comportant des étages montés en série et,
où chaque étage de registre peut être selectionné,
et où lors de l'écriture/lecture des données à imprimer, une adresse de colonne prédéterminée (étage de registre) peut être réalisée par l'adressage par lignes successives dans ladite mémoire 6 chaque fois pour écrire ou lire au moyen d'un registre d'addition (8, 10) associé à ladite mémoire,
caractérisé en ce que
lesdites données sont réparties par groupes (GI, GII) dans un registre parallèle (7), où à chaque groupe (GI, GII) est associée une partie (6-1, 6-2) de ladite mémoire (6) comportant chaque fois $k_G$ lignes ($k_G$ indiquant la sélection des électrodes prévues pour un groupe de ladite mémoire) et un nombre p de colonnes, correspondant à la longueur d'une ligne d'impression,
en ce que lesdits bits d'une même position sont lues en même temps et en parallèle dans tous les groupes (GI, GII),
en ce que la lecture des données à imprimer destinées aux électrodes dans lesdites mémoires (6-1, 6-2) est effectuée simultanément par colonne et en parallèle par bit.

2. Dispositif selon la revendication 1, caractérisé en ce qu'une adresse de colonnes consécutives (étages de registre) est fournie via un registre d'adressage de colonnes de mémoire (13) aux registres additionneurs (8, 10) de même que des valeurs d'adressage tenant compte de l'agencement oblique des électrodes et sélectivement des constantes d'adressage tenant compte du nombre d'électrodes.

3. Dispositif selon la revendication 1, caractérisé en ce que pour un nombre k d'électrodes calculée selon une puissance de base 2 et pour un décalage horizontal des électrodes pouvant être défini comme n fois le diamètre des électrodes, le circuit de commande de cycle (12) est un compteur binaire qui compte jusqu'au produit de n et de cette puissance, que ses impulsions sont transmises au registre d'adressage de colonnes de mémoire (13) et,
en ce que les registres additionneurs (8, 10) sont constitués d'un premier circuit en chaîe d'étages additionneurs binaires, dont les sorties — en commençant par une étage dont la valeur est fonction de la grandeur des constantes d'adressage à additionner — sont à leur tour transmises à un second circuit en chaîne d'étages additionneurs binaires, chaque étage de registre ayant deux entrées.

4. Dispositif selon une des revendications 1 à 3, caractérisé en ce que dans le cas d'un grand nombre d'électrodes, les mémoires (15-1, 15-2, 16-1, 16-2) sont divisées en domaines (15-1-1, 15-1-2; 15-2-1, 15-2-2; 16-1-1, 16-1-2; 16-2-1, 16-2-2) contenant chacun une demie-longueur de ligne de mémoire et,
que les lignes de chaque domaine de mémoire sont associées à des électrodes données.

5. Dispositif selon la revendication 4, caractérisé en ce que la partie d'un registre d'entrée (17, 18) qui correspond à un groupe de données est associé de façon permanente aux mémoires (15-1, 15-2, 16-1, 16-2).

6. Dispositif selon la revendication 4, caractérisé en ce qu'il est prévu un seul registre d'entrée auquel sont associées successivement les différentes mémoires (15-1, 15-2, 16-1, 16-2).

7. Dispositif selon une des revendications 1 à 6, caractérisé en ce que pour préparer des données comprimées qui ne contiennent pas d'information significative identifiée dans le flux de données par l'indication de leur type d'information et de leur longueur de champ, aucune information significative n'est écrite dans le dispositif de mémoire entier (21) avant l'enregistrement des données à imprimer.

8. Dispositif selon la revendication 7, caractérisé en ce que le flux de données est organisé, selon les domaines de mémoire sélectionnés successivement (15-1-1, 15-2-1; 16-1-1, 16-2-1; 15-1-2, 15-2-2; 16-1-2, 16-2-2), en bloc en fonction des électrodes associées auxdits domaines de mémoire.

## FIG. 1A

ZSPNR

| | 26 | 25 | 24 | 18 | 17 | 16 | 10 | 9 | 8 |
|---|---|---|---|---|---|---|---|---|---|
| C1 | 0 + 26 | 0 + 25 | 0 + 24 | 0 + 18 | 0 + 17 | 0 + 16 | 0 + 10 | 0 + 9 | 0 + 8 |
| C2 | 8 + 26 | 8 + 25 | 8 + 24 | 8 + 18 | 8 + 17 | 8 + 16 | 8 + 10 | 8 + 9 | 8 + 8 |
| C3 | 16 + 26 | 16 + 25 | 16 + 24 | 16 + 18 | 16 + 17 | 16 + 16 | 16 + 10 | 16 + 9 | 16 + 8 |
| C4 | 24 + 26 | 24 + 25 | 24 + 24 | 24 + 18 | 24 + 17 | 24 + 16 | 24 + 10 | 24 + 9 | 24 + 8 |
| C1 | 32+ 0+26 | 32+ 0+25 | 32+ 0+24 | 32+ 0+18 | 32+ 0+17 | 32+ 0+16 | 32+ 0+10 | 32+ 0+9 | 32+ 0+8 |
| C2 | 32+ 8+26 | 32+ 8+25 | 32+ 8+24 | 32+ 8+18 | 32+ 0+17 | 32+ 8+16 | 32+ 8+10 | 32+ 8+9 | 32+ 8+8 |
| C3 | 32+16+26 | 32+16+25 | 32+16+24 | 32+16+18 | 32+16+17 | 32+16+16 | 32+16+10 | 32+16+9 | 32+16+8 |
| C4 | 32+24+26 | 32+24+25 | 32+24+24 | 32+24+18 | 32+24+17 | 32+24+16 | 32+24+10 | 32+24+9 | 32+24+8 |

ZSPNR — ZSPAD

| | 5 | 4 | 3 | 2 | 1 | 0 |
|---|---|---|---|---|---|---|
| C1 | 0 + 5 | 0 + 4 | 0 + 3 | 0 + 2 | 0 + 1 | 0 + 0 |
| C2 | 8 + 5 | 8 + 4 | 8 + 3 | 8 + 2 | 8 + 1 | 8 + 0 |
| C3 | 16 + 5 | 16 + 4 | 16 + 3 | 16 + 2 | 16 + 1 | 16 + 0 |
| C4 | 24 + 5 | 24 + 4 | 24 + 3 | 24 + 2 | 24 + 1 | 24 + 0 |
| C1 | 32+ 0+5 | 32+ 0+4 | 32+ 0+3 | 32+ 0+2 | 32+ 0+1 | 32+ 0+0 |
| C2 | 32+ 8+5 | 32+ 8+4 | 32+ 8+3 | 32+ 8+2 | 32+ 8+1 | 32+ 8+0 |
| C3 | 32+16+5 | 32+16+4 | 32+16+3 | 32+16+2 | 32+16+1 | 32+16+0 |
| C4 | 32+24+5 | 32+24+4 | 32+24+3 | 32+24+2 | 32+24+1 | 32+24+0 |

ZSPAD

## FIG. 1

| FIG 1A | FIG 1B |
|---|---|

0 039 796

FIG. 1B

0 039 796

## FIG. 2A

ZENTRALE VERARBEIT-EINHEIT
1

→ STEUER-EINHEIT
2

→ HAUPT-SPEICHER
3

→ SP. R
4-1

→ SPALTENSPEICHER M. VERSCHIEBE-FUNKTION
4

→ ZUR DRUCK-AUSGABE DURCH DIE ELEKTRODEN (STAND DER TECHNIK)

## FIG. 2B

ZENTRALE VERARBEIT-EINHEIT
1

→ STEUER-EINHEIT
2

→ SP. R.
5-1

→ ZEILENSPEICHER MIT VERSCHIEBEFUNKTION
5

→ ZUR DRUCK-AUSGABE DURCH DIE ELEKTRODEN

## FIG. 3

E8

E7

111

8 PEL

100

## FIG. 4

| FIG. 4A | FIG. 4B |
| --- | --- |

## FIG. 4A

20

BITSERIELL
19

20-16-25/32
(f.E. 25-32)

20-16-17/24
(f.E. 17-24)

20-15-9/16
(f.E. 9-16)

20-15-1/8
(f.E. 1-8)

FIG. 4B

FIG. 5A

FIG. 5B

FIG. 6

FIG. 7

ZSPAD FL